# EUROPEAN PATENT APPLICATION

(11) **EP 4 678 438 A1**
(43) Date of publication of application: **14.01.2026**
(21) Application number: 24188409.7
(22) Date of filing: 12.07.2024
(51) Int. Cl.: B60K 1/04, B60K 1/00

(54) **A FRAME MODULE AND A MODULAR FRAME FOR AN ELECTRIC VEHICLE**

(71) Applicant: VOLVO TRUCK CORPORATION, 405 08 Göteborg (SE)
(72) Inventor: SHARIFIAN, Nozhan, 421 29 VÄSTRA FRÖLUNDA (SE); ERICSSON, Fredrik, 405 08 GÖTEBORG (SE); VÄNERHAV, Axel, 443 38 LERUM (SE); PARASTAR, Amir, 417 61 GÖTEBORG (SE); SJÖBERG, Sven, 445 56 SURTE (SE)
(74) Representative: Kransell & Wennborg KB

(57) **Abstract**

A frame module (110) and a modular frame of an electric vehicle extending along a longitudinal direction (L), the frame module comprising:
a longitudinally extending central partition wall (111),
a front wall (112) and a rear wall (113),
a battery storage structure having first and second battery storage compartments (115, 116) provided on opposite sides of the central partition wall (111), each battery storage compartment being configured to receive at least one battery module (200) and being delimited by the central partition wall and longitudinally extending first and second side walls of the frame module, respectively,
the first and second side walls being releasably mounted to the battery storage structure to enable opening of the first and second battery storage compartments (115, 116), respectively.

## Description

### TECHNICAL FIELD

The disclosure relates generally to frames for electric vehicles. In particular aspects, the disclosure relates to a frame module, a modular frame for an electric vehicle, a method for mounting of a plurality of battery modules to a frame module, and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Heavy-duty vehicles such as trucks generally have longitudinal frame rails to which front and rear axles of the vehicle are mounted. Transverse beams are used to connect the frame rails to one another and reinforce the frame. The space between the frame rails is therefore limited and usually too small to mount a battery pack having the desired energy storage capacity. To improve driving range of the vehicle, it is therefore desirable to provide a frame for an electric vehicle that provides more space for mounting of the battery pack.

### SUMMARY

According to a first aspect of the disclosure, a frame module for a modular frame of an electric vehicle extending along a longitudinal direction is provided. The frame module comprises:
a longitudinally extending central partition wall,
a front wall and a rear wall extending in a transverse direction perpendicular to the longitudinal direction,
a battery storage structure having first and second battery storage compartments provided on opposite sides of the central partition wall, each battery storage compartment being configured to receive at least one battery module, each first battery storage compartment being delimited in the transverse direction by the central partition wall and a longitudinally extending first side wall of the frame module, each second battery storage compartment being delimited in the transverse direction by the central partition wall and a longitudinally extending second side wall of the frame module,
the first and second side walls being releasably mounted to the battery storage structure to enable opening of the first and second battery storage compartments, respectively.

The first aspect of the disclosure may seek to provide an in at least some aspect improved frame module for a modular frame of an electric vehicle. In particular, it may seek to provide such a frame module which provides an increased storage space for battery modules in comparison with traditional vehicle frames, and in which the battery modules may be easily mounted and accessed for service. A technical benefit may include the possibility to store a plurality of battery modules in the battery storage structure without being limited by longitudinal beams or rails. Furthermore, thanks to the releasably mounted first and second side walls, the battery modules may be easily mounted from the side, such as by sliding them into the respective battery compartment. The releasably mounted first and second side walls may also facilitate service since each battery module may be accessed from outside of the vehicle by simply removing one of the first and second side walls.

Optionally in some examples, including in at least one preferred example, each battery storage compartment comprises at least one structural member configured to enable sliding of one of the battery modules into the battery storage compartment along the transverse direction. A technical benefit may include facilitated mounting of the battery modules as well as facilitated service.

Optionally in some examples, including in at least one preferred example, the at least one structural member comprises at least one rail structure. A technical benefit may include facilitated sliding of the battery modules into and out of the battery storage compartment.

Optionally in some examples, including in at least one preferred example, each battery storage compartment is configured to receive a plurality of battery modules stacked on top of one another. A technical benefit may include that a compact battery storage structure can be achieved.

Optionally in some examples, including in at least one preferred example, the battery storage structure comprises a plurality of the first battery storage compartments consecutively arranged in the longitudinal direction, and a plurality of the second battery storage compartments consecutively arranged in the longitudinal direction. The first and second battery storage compartments hence forms two parallel columns provided on opposite sides of the central partition wall. Transverse walls, parallel with the front and rear walls, may be provided that separate each two consecutive battery storage compartments. A technical benefit may include that individual battery modules may be better protected when grouped into a plurality of separated battery storage compartments.

Optionally in some examples, including in at least one preferred example, the frame module further comprises at least one cooling conduit configured to distribute liquid coolant to each one of the battery storage compartments. A technical benefit may include efficient cooling of the battery modules, preventing overheating thereof.

Optionally in some examples, including in at least one preferred example, the cooling conduit comprises, at each battery storage compartment, at least one fluid connection member configured to be fluidly connected to at least one corresponding fluid connection member of a battery module received in the battery storage compartment. A technical benefit may include that it is thereby possible to distribute liquid coolant to each battery module. Preferably, the cooling conduit comprises, at each battery storage compartment, two fluid connection members, one inlet and one outlet, configured to be fluidly connected to two corresponding fluid connection members of the battery module, respectively. In this way, parallel coupling of the battery modules to the cooling conduit is enabled.

Optionally in some examples, including in at least one preferred example, the at least one cooling conduit is provided within the central partition wall. A technical benefit may include efficient distribution of liquid coolant to all battery storage compartments of the frame module.

Optionally in some examples, including in at least one preferred example, the at least one fluid connection member is configured to be fluidly connected to the corresponding at least one fluid connection member of the battery module by sliding the battery module into the battery storage compartment along the transverse direction. A technical benefit may include that a quick and easy fluid connection of a cooling circuit of each battery module to the cooling conduit can be achieved when the battery module is mounted.

Optionally in some examples, including in at least one preferred example, the at least one cooling conduit is configured to be connected to a cooling system of the vehicle at the front wall of the frame module. A technical benefit may include facilitated connection to the existing cooling system of the vehicle.

Optionally in some examples, including in at least one preferred example, the frame module is configured to receive an electronic control unit at the rear wall of the frame module. A technical benefit may include that an electronic control unit for controlling an electric powertrain, such as including, e.g., a junction box, a power converter, a battery disconnect unit, an electric motor drive, and a battery management system, can be provided near the battery storage structure.

Optionally in some examples, including in at least one preferred example, the rear wall comprises a double wall structure comprising a rearmost wall configured to be fixed to a rear frame module of the modular frame, and a battery storage structure delimiting wall, wherein a gap configured to receive the electronic control unit is provided between the rearmost wall and the battery storage structure delimiting wall. A technical benefit may include that a structurally protected space is provided for the electronic control unit in close proximity to the battery storage structure.

Optionally in some examples, including in at least one preferred example, the rearmost wall comprises an opening enabling access to the electronic control unit. A technical benefit may include easy access to the electronic control unit.

Optionally in some examples, including in at least one preferred example, the first and second side walls are structured to provide side crash protection for the battery modules. For example, the side walls may be formed by extruded members. A technical benefit may include improved safety and a reduced risk of damage to the batteries caused by impact on the side wall by, e.g., another vehicle, in a side crash scenario.

Optionally in some examples, including in at least one preferred example, the front wall is configured to be fixed to a front frame module of the modular frame. A technical benefit may include ease of mounting to the front frame module. The front wall may, e.g., comprise a supporting crossmember that can be used for attachment to the front frame module.

According to a second aspect of the disclosure, a modular frame for an electric vehicle is provided. The modular frame comprises the frame module of the first aspect, a rear frame module fixed to the rear wall, and a front frame module fixed to the front wall. The frame module of the first aspect hence forms a middle frame module of the modular frame. The second aspect of the disclosure may seek to provide an in at least some aspect improved modular frame for an electric vehicle. A technical benefit may include a modular frame in which the battery modules may directly contribute to the stiffness and the torsional behaviour of the vehicle. A relatively compact and stiff modular frame for an electric vehicle may thereby be achieved.

According to a third aspect of the disclosure, an electric vehicle comprising a modular frame of the second aspect is provided, wherein at least one front axle is mounted to the front frame module and at least one rear axle is mounted to the rear frame module, and wherein a plurality of battery modules is distributed within the battery storage compartments of the battery storage structure. Technical benefits correspond to those of the second aspect.

According to a fourth aspect of the disclosure, a method for mounting of a plurality of battery modules to a frame module of the first aspect is provided. The method comprises:
sliding each battery module into one of the battery storage compartments along the transverse direction,
mounting the first and second side walls to the battery storage structure, thereby closing the first and second battery storage compartments, respectively.

The fourth aspect of the disclosure may seek to provide an in at least some aspect improved method for mounting of battery modules to the frame of an electric vehicle. A technical benefit may include facilitated mounting of the battery modules from the side of the frame module, before or after assembling of the modular frame. This means that the battery modules may be mounted at a late stage of a vehicle assembly process, without the need to provide access to the battery storage compartments via a top side or a bottom side of the battery storage structure.

Optionally in some examples, including in at least one preferred example, the mounting of the first and second side walls is carried out by using releasable fastening members. A technical benefit may include facilitated service or exchange of the battery modules.

Optionally in some examples, including in at least one preferred example, the sliding of the battery modules is performed such that at least one fluid connection member of each battery module engages with at least one corresponding fluid connection member provided at the central partition wall of the battery storage structure. A technical benefit may include ease of connection of the battery modules to the cooling system of the vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings. The drawings are schematic and not drawn to scale.
**FIG. 1** is an exemplary vehicle according to an example.
**FIG. 2** is a side view of a modular frame according to an example.
**FIG. 3** is a top view of the frame in FIG. 2.
**FIG. 4** is a perspective view of a frame module according to an example.
**FIG. 5** is another perspective view of the frame module shown in FIG. 4.
**FIG. 6** is another perspective view of the frame module shown in FIG. 4.
**FIG. 7** is a side view of the frame module shown in FIG. 4.
**FIG. 8** is a flow chart illustrating a method according to an example.

### DETAILED DESCRIPTION

The detailed description set forth below provides information and examples of the disclosed technology with sufficient detail to enable those skilled in the art to practice the disclosure.

Heavy-duty vehicles such as trucks generally have longitudinal frame rails, extending along an entire length of the vehicle, to which front and rear axles of the vehicle are mounted. A plurality of transverse beams is used to connect the frame rails to one another and reinforce the frame. The space between the frame rails is therefore limited and usually too small to mount a battery pack having the desired energy storage capacity. It is therefore desirable to provide a frame for an electric vehicle that is at the same time sufficiently rigid and that provides more space for mounting of a battery pack that can store enough energy to reach a desired driving range of the vehicle. Furthermore, it is desirable to provide such a frame which enables facilitated mounting, service and exchange of battery modules, in which the battery modules are well protected during travel of the vehicle.

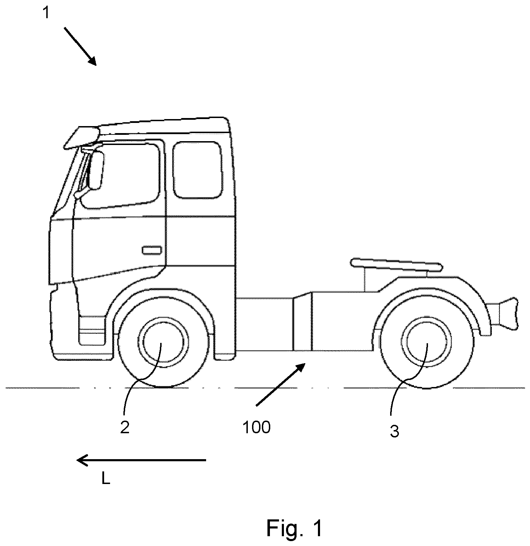

**FIG. 1** schematically illustrates an exemplary electric vehicle in the form of a heavy-duty towing truck 1 having a front axle 2 and a rear axle 3, and in which a modular frame 100 according to examples of the present disclosure may be applied. The vehicle 1 extends in a longitudinal direction L, corresponding to a forward driving direction of the vehicle 1.

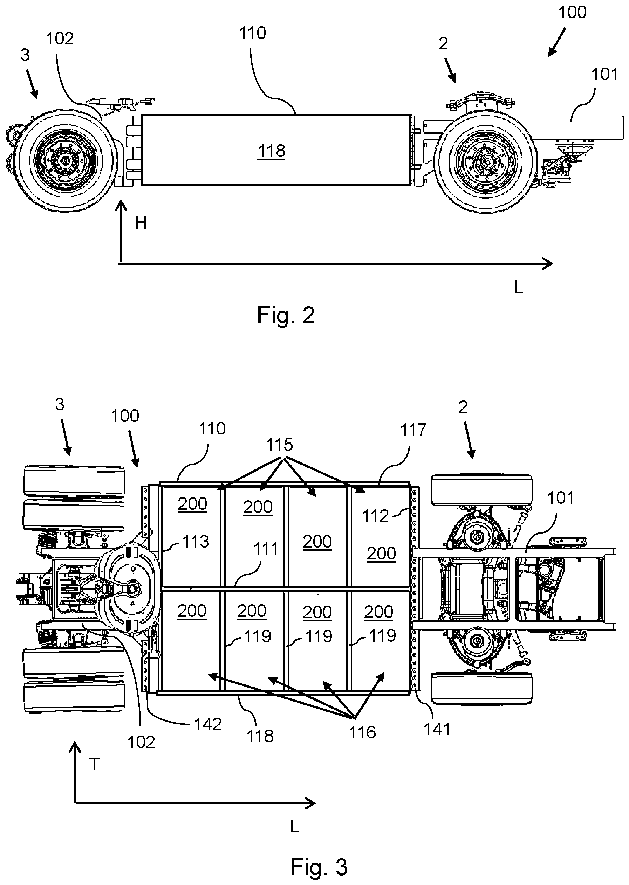

**FIG. 2** and **FIG. 3** show a schematic side view and top view, respectively, of a modular frame 100 according to an example of the disclosure. The modular frame 100 comprises a front frame module 101 to which the front axle 2 of the vehicle 1 is mounted and a rear frame module 102 to which the rear axle 3 is mounted. A middle frame module 110 is provided between the front and rear frame modules 101, 102 as seen in the longitudinal direction L. The middle frame module 110 is configured for mounting of a battery pack comprising a plurality of battery modules 200, wherein the battery pack is configured to provide electric power for driving at least one electric motor of the vehicle 1. Each battery module 200 may in turn comprise several battery cells (not shown), such as several hundreds of battery cells. The middle frame module 110 comprises a longitudinally extending central partition wall 111. The central partition wall 111 extends in a height direction H of the vehicle 1, perpendicular to the longitudinal direction L, and is in a transverse direction T located at a mid-plane of the vehicle 1. A front wall 112 and a rear wall 113 of the middle frame module 110 extends in the transverse direction T, perpendicular to the longitudinal direction L, and in the height direction H. A battery storage structure of the middle frame module 110 comprises a plurality of first and second battery storage compartments 115, 116 provided on opposite sides of the central partition wall 111. In the illustrated example, four first battery storage compartments 115 and four second battery storage compartments 116 are provided, although in other examples fewer or more battery storage compartments may be provided on each side of the central partition wall 111. Four first battery storage compartments 115 and four second battery storage compartments 116 are in the illustrated example consecutively arranged in the longitudinal direction L. Each two longitudinally adjacent battery storage compartments 115, 116 are separated by a transverse wall 119 extending in parallel with the front wall 112 and the rear wall 113. Hence, in the illustrated example, three transverse walls 119 are provided, such that a total of eight battery storage compartments 115, 116 of the same size are formed.

Each battery storage compartment 115, 116 is configured to receive at least one battery module 200. When the modular frame 100 is in use, each first battery storage compartment 115 is delimited in the transverse direction T by the central partition wall 111 and a longitudinally extending first side wall 117 of the middle frame module 110. Each second battery storage compartment 116 is delimited in the transverse direction T by the central partition wall 111 and a longitudinally extending second side wall 118 of the middle frame module 110. Hence, the central partition wall 111 separates the first battery storage compartments 115 from the second battery storage compartments 116.

The first and second side walls 117, 118 are releasably mounted to the battery storage structure to enable opening of the first and second battery storage compartments 115, 116, respectively. The side walls 117, 118 may, e.g., be releasably mounted using releasable fastening members (not shown), such as threaded fasteners. Hence, easy access to the battery storage compartments 115, 116 via sides of the vehicle 1 is enabled, instead of having to access the battery storage compartments from a top or a bottom of the battery storage structure. This facilitates mounting, exchange and service of the battery modules 200. Although the side walls 117, 118 are herein illustrated as single walls covering an entire side surface of the battery storage structure, each side wall may alternatively comprise a plurality of wall segments, each segment covering one or more of the battery storage compartments 115, 116. The wall segments may be individually mounted by fastening members, such as screws, to enable individual detachment of the wall segments to gain access to one or more of the battery storage compartments.

The front wall 112 of the middle frame module 110 is fixed to the front frame module 101 and the rear wall 113 of the middle frame module 110 is fixed to the rear frame module 102. For this purpose, supporting cross-members 141, 142 are provided on each one of the front and rear walls 112, 113, enabling fixation of the frame modules 101, 102, 110 to one another. Front cross-members 141 are provided at the front wall 112 for fixing the middle frame module 110 to the front frame module 101. Rear cross-members 142 are attached to the rear wall for fixing the middle frame module 110 to the rear frame module 102. The front and/or the rear cross-members 141, 142 may comprise a bracket, providing rigidity. Rubber bushings (not shown) may be used when connecting the frame modules to one another using the cross-members.

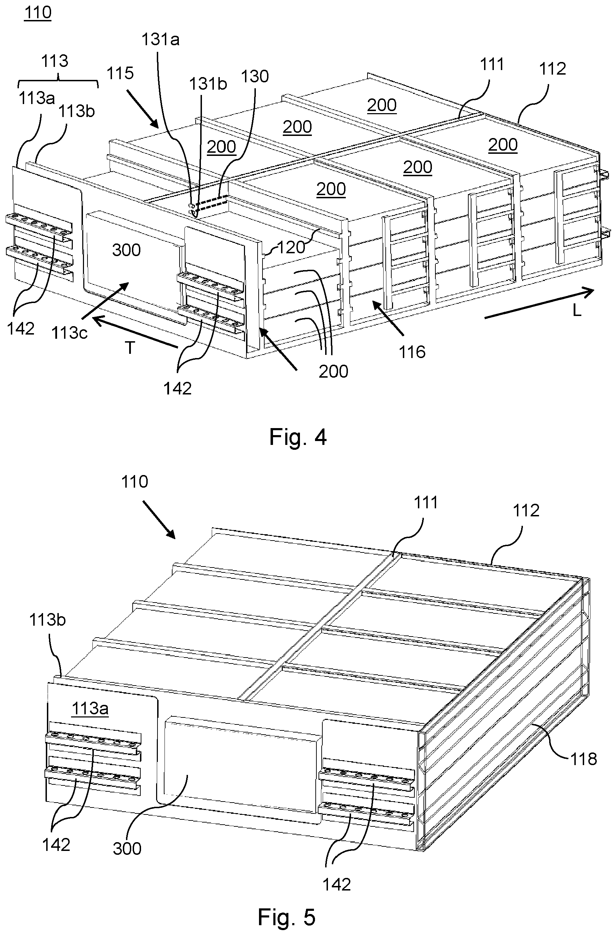

**FIG. 4** is a perspective view of the middle frame module 110 illustrated without the side walls 117, 118, and with two of the battery modules 200 removed. FIG. 5 illustrates the middle frame module 110 with the second side wall 118 mounted thereto. The second side wall 118 is herein a structured side wall providing protection against side collisions. It may, e.g., comprise an extruded member. The first side wall 117, not illustrated in FIG. 5, may have the same configuration as the second side wall 118.

As shown in FIG. 4, a plurality of battery modules 200 are mounted in the first and second battery storage compartments 115, 116. Each battery storage compartment 115, 116 comprises at least one structural member 120 configured to enable sliding of one of the battery modules 200 into the battery storage compartment 115, 116 along the transverse direction T. In the illustrated example, the structural members 120 comprise rail structures configured to slidingly engage with grooves provided in the battery modules 200. In other examples, the structural members may be planar surfaces, perpendicular to the height direction H, on which the battery modules 200 may rest. Each battery storage compartment 115, 116 is further configured to receive a plurality of battery modules 200 stacked on top of one another, in the illustrated example up to four battery modules 200 per battery storage compartment 115, 116. Hence, each battery storage compartment 115, 116 comprises four pairs of rail structures for sliding four battery modules 200 into the battery storage compartment 115, 116. In other examples, each battery storage compartment may be configured to receive fewer or more battery modules. Each battery module 200 is individually removable from the battery storage compartment 115, 116 by sliding it along the transverse direction T.

The middle frame module 110 is further configured to receive an electronic control unit 300 at the rear wall 113 of the frame module 110. The electronic control unit 300 may be configured for controlling an electric powertrain of the vehicle 1. It may, e.g., comprise a junction box, a power converter, a battery disconnect unit, an electric motor drive, and a battery management system. Hence, electronic controls and circuitry may be collected at the same location. In the illustrated example, the rear wall 113 comprises a double wall structure comprising a rearmost wall 113a configured to be fixed to the rear frame module 102, and a battery storage structure delimiting wall 113b. A gap configured to receive the electronic control unit 300 is provided between the rearmost wall 113a and the battery storage structure delimiting wall 113b. The rearmost wall 113a comprises an opening 113c enabling access to the electronic control unit 300. The rear cross-members 142 are attached to the rearmost wall 113a. The double wall structure provides structural protection for the electronic control unit 300.

The middle frame module 110 may further comprise at least one cooling conduit 130 configured to distribute liquid coolant to each one of the battery storage compartments 115, 116. In the illustrated example, the cooling conduit 130 is provided within the central partition wall 111. Fluid conduits (not shown) of each battery module 200 may be fluidly connected to fluid connection members 131a, 131b of the cooling conduit 130 within the central partition wall 111, since the central partition wall 111 is adjacent to all the battery modules 200. The fluid connection members 131a, 131b are configured to be fluidly connected to corresponding fluid connection members (not shown) of the battery modules 200 by sliding the battery modules 200 into the battery storage compartment 115, 116 along the transverse direction T. Each battery module 200 may thereby be cooled using liquid coolant. distributed via the cooling conduit 130 and circulated through the fluid conduit of the battery module 200 via the fluid connection members 131a, 131b, forming an inlet and an outlet, respectively.

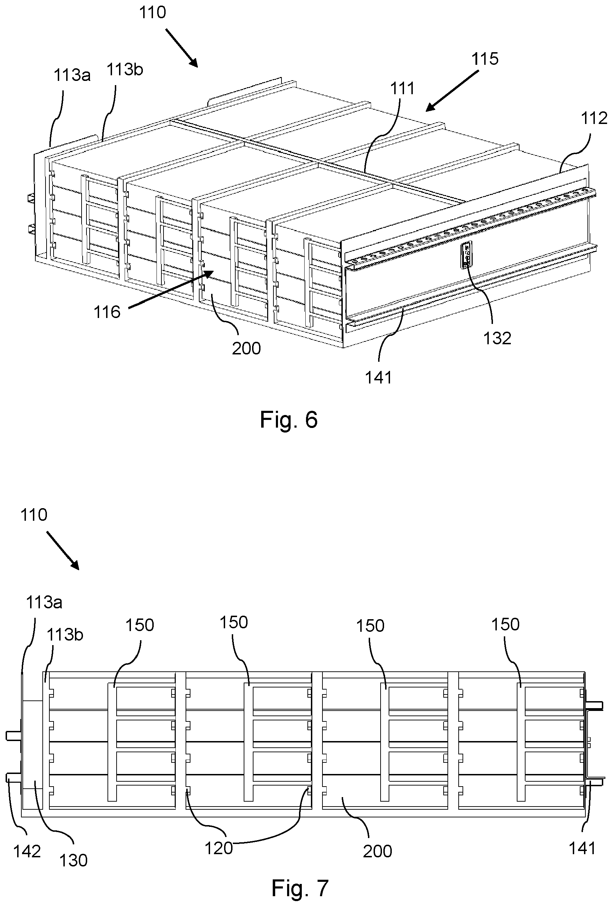

The cooling conduit 130 extending within the central partition wall 111 is configured to be connected to a cooling system of the vehicle 1 at the front wall 112 of the frame module 110. As shown in **FIG. 6**, a fluid connection interface 132, forming an inlet and an outlet, is provided for this purpose. Although the cooling conduit 130 is herein illustrated as extending within the central partition wall 111, it may in other examples be possible to provide the cooling conduit in a top cover or a bottom (not shown) of the frame module 110 instead of within the central partition wall 111.

FIG. 6 further illustrates the front cross-member 141 in the form of a bracket that may be used for fixing the middle frame module 110 to the front frame module 101.

**FIG. 7** illustrates the middle frame module 110 in a side view with the second side wall 118 removed, or not yet installed. As can be seen, busbars 150 are provided and may be used for electrically connecting the battery modules 200 to the electronic control module 130, and/or to electrically connect the stacked battery modules 200 in each battery storage compartment 115, 116 to one another. The busbars 150 may be installed once all the battery modules 200 have been mounted in the respective battery storage compartments 115, 116.

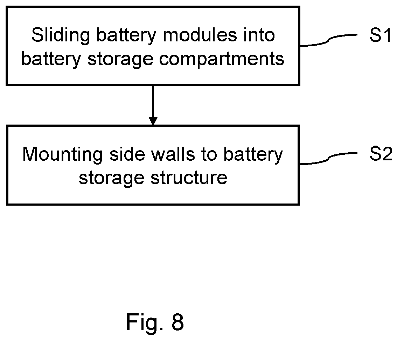

**FIG. 8** illustrates a method for mounting of a plurality of battery modules 200 to the middle frame module 110 according to an example of the disclosure. The method comprises an action S1 of sliding each battery module 200 into one of the battery storage compartments 115, 116 along the transverse direction T, and a subsequent action S2 of mounting the first and second side walls 115, 116 to the battery storage structure, thereby closing the first and second battery storage compartments 115, 116, respectively. The mounting of the first and second side walls 115, 116 may be carried out by using releasable fastening members, such as screws or bolts or similar. The sliding of the battery modules 200 may preferably be performed such that at least one fluid connection member of each battery module 200 engages with the at least one corresponding fluid connection member 131 provided at the central partition wall 111 of the battery storage structure.

The following is a list of numbered examples of aspects of the present disclosure.

**Example 1:** A frame module (110) for a modular frame (100) of an electric vehicle (1) extending along a longitudinal direction (L), the frame module (110) comprising: a longitudinally extending central partition wall (111),
a front wall (112) and a rear wall (113) extending in a transverse direction (T) perpendicular to the longitudinal direction (L),
a battery storage structure having first and second battery storage compartments (115, 116) provided on opposite sides of the central partition wall (111), each battery storage compartment (115, 116) being configured to receive at least one battery module (200), each first battery storage compartment (115) being delimited in the transverse direction (T) by the central partition wall (111) and a longitudinally extending first side wall (117) of the frame module (110), each second battery storage compartment (116) being delimited in the transverse direction (T) by the central partition wall (111) and a longitudinally extending second side wall (118) of the frame module (110),
   the first and second side walls (117, 118) being releasably mounted to the battery storage structure to enable opening of the first and second battery storage compartments (115, 116), respectively.

**Example 2:** The frame module of example 1, wherein each battery storage compartment comprises at least one structural member (120) configured to enable sliding of one of the battery modules (200) into the battery storage compartment (115, 116) along the transverse direction (T).

**Example 3:** The frame module of example 2, wherein the at least one structural member (120) comprises at least one rail structure.

**Example 4:** The frame module of any one of the preceding examples, wherein each battery storage compartment (115, 116) is configured to receive a plurality of battery modules (200) stacked on top of one another.

**Example 5:** The frame module of any one of the preceding examples, wherein the battery storage structure comprises a plurality of the first battery storage compartments (115) consecutively arranged in the longitudinal direction (L), and a plurality of the second battery storage compartments (116) consecutively arranged in the longitudinal direction (L).

**Example 6:** The frame module of any one of the preceding examples, further comprising at least one cooling conduit (130) configured to distribute liquid coolant to each one of the battery storage compartments (115, 116).

**Example 7:** The frame module of example 6, wherein the cooling conduit comprises, at each battery storage compartment, at least one fluid connection member (131) configured to be fluidly connected to at least one corresponding fluid connection member of a battery module (200) received in the battery storage compartment (115, 116).

**Example 8:** The frame module of example 6 or 7, wherein the at least one cooling conduit (130) is provided within the central partition wall (111).

**Example 9:** The frame module of example 8, wherein the at least one fluid connection member (131) is configured to be fluidly connected to the at least one corresponding fluid connection member of the battery module (200) by sliding the battery module (200) into the battery storage compartment (115, 116) along the transverse direction (T).

**Example 10:** The frame module of any one of examples 6-9, wherein the at least one cooling conduit (130) is configured to be connected to a cooling system of the vehicle at the front wall (112) of the frame module (110).

**Example 11:** The frame module of any one of the preceding examples, wherein the frame module (110) is configured to receive an electronic control unit (300) at the rear wall (113) of the frame module (110).

**Example 12:** The frame module of example 11, wherein the rear wall (113) comprises a double wall structure comprising a rearmost wall (113a) configured to be fixed to a rear frame module (102) of the modular frame (100), and a battery storage structure delimiting wall (113b), wherein a gap configured to receive the electronic control unit (300) is provided between the rearmost wall (113a) and the battery storage structure delimiting wall (113b).

**Example 13:** The frame module of example 12, wherein the rearmost wall (113a) comprises an opening (113c) enabling access to the electronic control unit (300).

**Example 14:** The frame module of any one of the preceding examples, wherein the first and second side walls (117, 118) are structured to provide side crash protection for the battery modules (200).

**Example 15:** The frame module of any one of the preceding examples, wherein the front wall (112) is configured to be fixed to a front frame module (101) of the modular frame (100).

**Example 16:** A modular frame (100) for an electric vehicle, comprising the frame module (110) of any one of the preceding examples, a rear frame module (102) fixed to the rear wall (113), and a front frame module (101) fixed to the front wall (112).

**Example 17:** An electric vehicle (1) comprising a modular frame (100) of example 16, wherein at least one front axle (2) is mounted to the front frame module (101) and at least one rear axle (3) is mounted to the rear frame module (102), and wherein a plurality of battery modules (200) is distributed within the battery storage compartments (115, 116) of the battery storage structure.

**Example 18:** A method for mounting of a plurality of battery modules (200) to a frame module (110) of any one of examples 1-15, the method comprising:
sliding (S 1) each battery module (200) into one of the battery storage compartments (115, 116) along the transverse direction (T),
mounting (S2) the first and second side walls (117, 118) to the battery storage structure, thereby closing the first and second battery storage compartments (115, 116), respectively.

**Example 19:** The method of example 18, wherein the mounting of the first and second side walls (117, 118) is carried out by using releasable fastening members.

**Example 20:** The method of example 18 or 19, wherein the sliding of the battery modules (200) is performed such that at least one fluid connection member of each battery module (200) engages with at least one corresponding fluid connection member (131a, 131b) provided at the central partition wall (111) of the battery storage structure.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A frame module (110) for a modular frame (100) of an electric vehicle (1) extending along a longitudinal direction (L), the frame module (110) comprising:
a longitudinally extending central partition wall (111),
a front wall (112) and a rear wall (113) extending in a transverse direction (T) perpendicular to the longitudinal direction (L),
a battery storage structure having first and second battery storage compartments (115, 116) provided on opposite sides of the central partition wall (111), each battery storage compartment (115, 116) being configured to receive at least one battery module (200), each first battery storage compartment (115) being delimited in the transverse direction (T) by the central partition wall (111) and a longitudinally extending first side wall (117) of the frame module (110), each second battery storage compartment (116) being delimited in the transverse direction (T) by the central partition wall (111) and a longitudinally extending second side wall (118) of the frame module (110),
the first and second side walls (117, 118) being releasably mounted to the battery storage structure to enable opening of the first and second battery storage compartments (115, 116), respectively.

2. The frame module of claim 1, wherein each battery storage compartment comprises at least one structural member (120) configured to enable sliding of one of the battery modules (200) into the battery storage compartment (115, 116) along the transverse direction (T).

3. The frame module of claim 2, wherein the at least one structural member (120) comprises at least one rail structure.

4. The frame module of any one of the preceding claims, wherein each battery storage compartment (115, 116) is configured to receive a plurality of battery modules (200) stacked on top of one another.

5. The frame module of any one of the preceding claims, wherein the battery storage structure comprises a plurality of the first battery storage compartments (115) consecutively arranged in the longitudinal direction (L), and a plurality of the second battery storage compartments (116) consecutively arranged in the longitudinal direction (L).

6. The frame module of any one of the preceding claims, further comprising at least one cooling conduit (130) configured to distribute liquid coolant to each one of the battery storage compartments (115, 116).

7. The frame module of claim 6, wherein the cooling conduit comprises, at each battery storage compartment, at least one fluid connection member (131) configured to be fluidly connected to at least one corresponding fluid connection member of a battery module (200) received in the battery storage compartment (115, 116).

8. The frame module of claim 6 or 7, wherein the at least one cooling conduit (130) is provided within the central partition wall (111).

9. The frame module of claim 8, wherein the at least one fluid connection member (131) is configured to be fluidly connected to the at least one corresponding fluid connection member of the battery module (200) by sliding the battery module (200) into the battery storage compartment (115, 116) along the transverse direction (T).

10. The frame module of any one of claims 6-9, wherein the at least one cooling conduit (130) is configured to be connected to a cooling system of the vehicle at the front wall (112) of the frame module (110).

11. The frame module of any one of the preceding claims, wherein the frame module (110) is configured to receive an electronic control unit (300) at the rear wall (113) of the frame module (110).

12. A modular frame (100) for an electric vehicle, comprising the frame module (110) of any one of the preceding claims, a rear frame module (102) fixed to the rear wall (113), and a front frame module (101) fixed to the front wall (112).

13. An electric vehicle (1) comprising a modular frame (100) of claim 12, wherein at least one front axle (2) is mounted to the front frame module (101) and at least one rear axle (3) is mounted to the rear frame module (102), and wherein a plurality of battery modules (200) is distributed within the battery storage compartments (115, 116) of the battery storage structure.

14. A method for mounting of a plurality of battery modules (200) to a frame module (110) of any one of claims 1-11, the method comprising:
sliding (S1) each battery module (200) into one of the battery storage compartments (115, 116) along the transverse direction (T),
mounting (S2) the first and second side walls (117, 118) to the battery storage structure, thereby closing the first and second battery storage compartments (115, 116), respectively.

15. The method of claim 14, wherein the sliding of the battery modules (200) is performed such that at least one fluid connection member of each battery module (200) engages with at least one corresponding fluid connection member (131a, 131b) provided at the central partition wall (111) of the battery storage structure.
